## Europäisches Patentamt
## European Patent Office
## Office européen des brevets

(19)

(11) Numéro de publication: **0 120 762**
**B1**

(12) # FASCICULE DE BREVET EUROPÉEN

(45) Date de publication du fascicule du brevet:
10.06.87

(51) Int. Cl.⁴: **H 05 K 7/00,** B 23 P 15/26

(21) Numéro de dépôt: **84400503.3**

(22) Date de dépôt: **13.03.84**

(54) Procédé de fabrication d'un dissipateur thermique et un dissipateur thermique obtenu par ce procédé.

(30) Priorité: 25.03.83 FR 8304979

(43) Date de publication de la demande:
03.10.84 Bulletin 84/40

(45) Mention de la délivrance du brevet:
10.06.87 Bulletin 87/24

(84) Etats contractants désignés:
DE GB

(56) Documents cité:
DE-A-2 502 472
FR-A-2 407 049
GB-A-1 254 372
US-A-3 212 564

(73) Titulaire: THOMSON- CSF, 173, Boulevard Haussmann, F-75379 Paris Cedex 08 (FR)

(72) Inventeur: Ormieres, André, THOMSON- CSF SCPI 173, bld Haussmann, F-75379 Paris Cedex 08 (FR)
Inventeur: Moutet, Philippe, THOMSON- CSF SCPI 173, bld Haussmann, F-75379 Paris Cedex 08 (FR)
Inventeur: Beau, Christian, THOMSON- CSF SCPI 173, bld Haussmann, F-75379 Paris Cedex 08 (FR)
Inventeur: Gueuret, Raymond, THOMSON- CSF SCPI 173, bld Haussmann, F-75379 Paris Cedex 08 (FR)
Inventeur: Cuvier, Pierre, THOMSON- CSF SCPI 173, bld Haussmann, F-75379 Paris Cedex 08 (FR)

(74) Mandataire: Weinmiller, Jürgen, Lennéstrasse 9 Postfach 24, D-8133 Feldafing (DE)

## Description

La présente invention concerne un procédé de fabrication d'un dissipateur thermique et un dissipateur thermique obtenu par ce procédé.

Elle s'applique plus particulièrement à la réalisation de dissipateurs thermiques en convection naturelle, facilement intégrables sur des platines d'appareils électroniques.

Les dissipateurs thermiques connus (voir par exemple DE-A-2 502 472) sont généralement constitués par des radiateurs à ailettes et comprennent un support de base plan ou semelle sur lequel les ailettes sont disposées perpendiculairement à ce support. Plusieurs procédés de fabrication sont connus pour réaliser de tels radiateurs. Ces procédés font appel aux techniques de moulage, d'extrusion, de fraisage et/ou d'assemblage.

Dans la technique du moulage, les alliages à bonne conductibilité thermique présentent généralement une mauvaise coulabilité ce qui conduit à réduire la hauteur des ailettes de refroidissement et leur densité de répartition, limitant de ce fait la surface de contact avec le fluide de refroidissement. D'autre part, la nécessite de prévoir le démoulage limite les formes que peut revêtir un radiateur. A ces inconvénients s'ajoute le coût élevé d'un moule et les difficultés rencontrées pour obtenir les modifications des caractéristiques du radiateur.

Les procédés d'extrusion ne permettent pas d'obtenir des bandes extrudées de grandes largeurs et imposent dans le cas où les puissances à dissiper sont importantes de prévoir l'assemblage de plusieurs radiateurs, ce qui augmente le prix de revient des réalisations faisant usage de ces dissipateurs.

Le fraisage dans la masse introduit une perte importante de matière et demande un temps d'exécution relativement long, incompatible avec les techniques de fabrication en série. Les autres techniques d'assemblage, notamment la technique d'assemblage des dissipateurs en alliage d'aluminium soudés au bain de sel sont coûteuses à réaliser, car elles nécessitent un outillage particulier et un investissement important dûs au coût élevé du bain de sel.

Le but de l'invention est de pallier les inconvenients précipés.

A cet effet l'invention a pour objet un procédé de fabrication d'un dissipateur thermique formé par une semelle en alliage léger d'aluminium formant support à des ailettes de refroidissement caractérisé en ce qu'il consiste à réaliser la semelle et les ailettes dans un matériau en alliage léger d'aluminium, à pratiquer des rainures dans la semelle, chaque rainure étant dimensionnée pour permettre l'engagement d'une ailette par un de ses bords, à recouvrir par voie électrolytique la semelle et les ailettes d'une couche superficielle de cuivre, à engager les bords de chaque ailette devant être rendus solidaires de la semelle dans les rainures correspondantes et à souder par fusion d'un apport d'étain les bords des ailettes engagés dans les rainures, pour réaliser l'assemblage permanent des ailettes sur la semelle.

L'invention a également pour objet un dissipateur thermique formé par une semelle en alliage léger d'aluminium sur laquelle des ailettes de refroidissement sont fixées par au moins un de leur bord à l'intérieur de rainures, caractérisé en ce que la semelle et les ailettes sont recouvertes d'une couche de cuivre et que les ailettes sont maintenues soudées dans les rainures par une soudure à l'étain.

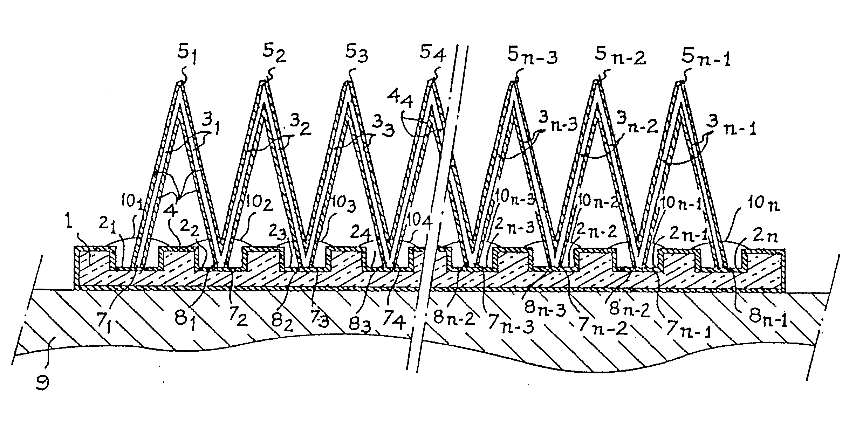

D'autres caractéristiques et avantages de l'invention apparaîtront au cours de la description faite au regard de la figure unique jointe donnée uniquement à titre d'exemple et qui représente un mode de réalisation du dissipateur thermique obtenu par le procédé de fabrication selon l'invention.

Le procédé consiste dans une première étape à usiner dans une plaque 1 en alliage léger d'aluminium du type AU4G formant semelle, des rainures $2_1$ à $2_n$, de profondeur et de largeur suffisantes pour permettre l'engagement et la fixation d'ailettes de refroidissement $3_1$ à $3_{n-1}$.

Dans une deuxième étape, une couche superficielle de cuivre 4 d'environ 60 microns est déposée sur la superficie de la plaque 1 de façon à la recouvrir entièrement. Cette opération est effectuée par exemple, après avoir constitué sur la plaque 1 une couche d'adhérence de zinc par immersion de la plaque 1 dans un bain à 25°C de soude OHNa à 450 gr. par litre, d'oxyde de zinc, ZnO, à 50 gr. par litre et de chlorure de fer à 1 gr. par litre.

Le dépôt du cuivre pourra être obtenu en utilisant un électrolyte composé de cyanure de cuivre CNCu à 52 gr. par litre, de cyanure de zinc CNZn à 12 gr. par litre, de cyanure de sodium CN Na à 85 gr. par litre, de carbonate de sodium $Na_2CO_3$ à 30 gr. par litre, de chlorure d'ammoniaque $NH_4Cl$ à 28 gr. par litre et de cyanure libre à 5 gr. par litre.

La troisième étape du procédé consiste à fabriquer les ailettes dans des plaques d'alliage léger AU4G. Un mode de réalisation possible et non obligatoire des ailettes est représenté sur la figure unique où les ailettes $3_1$ à $3_{n-1}$ sont obtenues par pliage des plaques autour de lignes de pliage numérotées respectivement $5_1$ à $5_{n-1}$. L'étape suivante du procédé consiste à déposer par voie électrolitique une couche de cuivre 4 sur les ailettes à l'aide du procédé précédemment décrit pour le dépôt de la couche de cuivre sur la plaque 1. Lorsque le dépôt de la couche de cuivre est terminé, les bords des ailettes $7_1$ à $7_{n-1}$ et $8_1$ à $8_{n-1}$ opposés respectivement aux lignes de pliage $5_1$ à $5_{n-1}$ sont engagés dans les rainures correspondantes $2_1$ à $2_n$ de la plaque 1. L'étape finale du procédé consiste à déposer des baguettes de soudure en étain en regard des rainures $2_1$ a $2_n$ et à déposer l'ensemble sur une plaque chauffante de façon à faire fondre l'étain qui en remplissant les rainures, rendra, une fois la couche d'étain refroidie, $(10_1 \ldots 10_n)$ les ailettes

solidaires de la plaque 1.

Une étape complémentaire consiste à décaper légèrement le dissipateur ainsi obtenu et a procéder a un étamage des surfaces du dissipateur pour parfaire son état de surface.

La détermination des caractéristiques dimensionnelles du dissipateur ainsi réalisé n'offre pas de difficultés, elle sera obtenue dans tous les cas à partir des caractéristiques de puissance à dissiper P, des écarts de température δT souhaités entre la température ambiante et les éléments électroniques placés sur le dissipateur, ainsi que du coefficient de convection hc. Lorsque ces trois paramètres sont connus, la surface de dissipation est déterminée par la formule $s = \frac{P}{hc \times \delta T}$ qui donne la surface de dissipation nécessaire pour évacuer les calories à l'extérieur du dispositif électronique. Cette surface permet de déduire facilement la hauteur qu'il faut donner aux ailettes de refroidissement, compte-tenu du pas optimal séparant chaque ailette pour permettre une convection naturelle.

Bien que le principe de la présente invention ait été décrit ci-dessus en relation avec un seul exemple de réalisation, il faut comprendre que la description n'a été faite qu'à titre d'exemple. D'autres variantes de réalisation sont en effet possibles notamment en modifiant la forme et les moyens d'obtention des ailettes de refroidissement. C'est ainsi qu'il sera tout aussi possible, de donner aux ailettes une forme plate rectangulaire, que de fabriquer les ailettes par pliage d'une bande d'alliage léger d'aluminium plusieurs fois sur elles-mêmes et alternativement autour de deux directions de pliage pour former une bande ondulée. Ce dernier mode de réalisation offre pour principal avantage de permettre d'obtenir une bande d'ailettes en une seule opération d'usinage, cette opération pouvant être effectuée par simple emboutissage d'une plaque en AU4C. On comprendra également que l'invention n'est pas limitée à une réalisation plate de la semelle, des formes cylindriques ou autres sont également envisageables.

**Revendications**

1. Procédé de fabrication d'un dissipateur thermique formé par une semelle (1) en alliage léger d'aluminium formant support à des ailettes de refroidissement ($3_1$ ... $3_{n-1}$), caractérisé en ce qu'il consiste à réaliser la semelle (1) et les ailettes ($3_1$ ... $3_{n-1}$) dans un matériau en alliage léger d'aluminium, à pratiquer des rainures ($2_1$ ... $2_n$) dans la semelle, chaque rainure étant dimensionnée pour permettre l'engagement d'une ailette ($3_1$ ... $3_{n-1}$) par au moins un de ses bords, à recouvrir par voie électrolitique la semelle et les ailettes d'une couche superficielle de cuivre (4), à engager les bords ($7_1$ ... $7_n$; $8_1$ ... $8_{n-1}$) de chaque ailette devant être rendus solidaires de la semelle (1) dans les rainures correspondantes ($2_1$ à 2) et à souder par fusion d'un apport d'étain les bords des ailettes engagés dans les rainures pour réaliser l'assemblage permanent des ailettes ($3_1$ ... $3_{n-1}$) sur la semelle.

2. Procédé selon la revendication 1, caractérisé en ce que les ailettes ($3_1$ ... $3_{n-1}$) sont obtenues par pliage d'une plaque autour d'une ligne de pliage ($5_1$ ... $5_{n-1}$) formant charnière et en ce que chaque ailette ($3_1$ ... $3_{n-1}$) est maintenue à l'intérieur des rainures de la semelle par les bords ($7_1$ ... $7_n$; $8_1$ ... $8_n$) opposés à l'arête.

3. Procédé selon la revendication 1, caractérisé en ce que les ailettes ($3_1$ ... $3_{n-1}$) sont obtenues par pliage d'une bande d'alliage léger d'aluminium plusieurs fois sur elle-même et alternativement autour de deux directions de pliage consécutives pour former une bande ondulée.

4. Procédé selon la revendication 3, caractérisé en ce que la bande repliée est maintenue sur la semelle par les lignes de pliage ($5_1$ ... $5_{n-1}$) d'une même direction, engagées à l'intérieur des rainures ($2_1$ ... $2_n$) de la semelle.

5. Procédé selon l'une quelconque des revendications 1 à 4, caractérisé en ce que le soudage des ailettes ($3_1$ ... $3_{n-1}$) sur la semelle est obtenu par dépôt de baguettes de soudure au regard des rainures ($2_1$ ... $2_n$) et par fusion des baguettes de soudure obtenues en plaçant la semelle sur une plaque chauffante.

6. Dissipateur thermique formé par une semelle (1) en alliage léger d'aluminium sur laquelle des ailettes ($3_1$ ... $3_{n-1}$) de refroidissement également en alliage léger d'aluminium sont fixées par au moins un de leur bord à l'intérieur des rainures ($2_1$ ... $2_n$), caractérisé en ce que la semelle (1) et les ailettes ($3_1$ ... $3_{n-1}$) sont recouvertes d'une couche de cuivre (4) et que les ailettes sont maintenues soudées dans les rainures par une soudure à l'étain ($10_1$ ... $10_n$).

7. Dissipateur selon la revendication 6, caractérisé en ce que les ailettes ($3_1$ à $3_{n-1}$) ont une forme plate rectangulaire.

8. Dissipateur selon la revendication 6, caractérisé en ce que chaque ailette ($3_1$ à $3_{n-1}$) a la forme d'une plaque repliée autour d'une ligne de pliage ($5_1$ ... $5_{n-1}$) formant charnière et en ce que chaque ailette ($3_1$ ... $3_{n-1}$) est maintenue à l'intérieur de rainures ($2_1$ ... $2_n$) dans la semelle (1) par les bords opposés à l'arête ($7_1$ ... $7_n$; $8_1$ ... $8_n$).

9. Dissipateur selon la revendication 7, caractérisé en ce que les ailettes ($3_1$ ... $3_{n-1}$) sont obtenues par pliage d'une bande d'aliage leger d'aluminium plusieurs fois sur elle même et alternativement autour de deux directions de pliage ($5_1$ ... $5_{n-1}$) consécutives pour former une bande ondulée.

10. Dissipateur selon l'une quelconque des revendications 6 à 9, caractérisé en ce que la semelle (1) a une forme plate.

## Patentansprüche

1. Verfahren zur Herstellung einer Wärmesenke bestehend aus einem Sockel (1) aus leichter Aluminiumlegierung, der Kühlrippen ($3_1$...$3_{n-1}$) trägt, dadurch gekennzeichnet, daß es darin besteht, den Sockel (1) und die Rippen ($3_1$...$3_{n-1}$) aus einer leichten Aluminiumlegierung herzustellen, in dem Sockel Nuten ($2_1$...$2_n$) anzubringen, wobei jede Nut so bemessen ist, daß sie das Einführen einer Rippe ($3_1$...$3_{n-1}$) mit mindestens einem ihrer Ränder ermöglicht, auf elektrolytischem Weg den Sockel und die Rippen mit einer Oberflächenschicht aus Kupfer (4) zu bedecken, die Ränder ($7_1$...$7_n$; $8_1$...$8_n$) jeder Rippe einzusetzen, die in den entsprechenden Nuten ($2_1$ bis $2_n$) fest mit dem Sockel (1) verbunden werden müssen, und durch Schmelzen eines Zinnzusatzes die Ränder der in die Nuten eingeführten Rippen zu verlöten, um die permanente Befestigung der Rippen ($3_1$...$3_{n-1}$) auf dem Sockel herzustellen.

2. Verfahren nach Anspruch 1, dadurch gekennzeichnet, daß die Rippen ($3_1$...$3_{n-1}$) durch Falten einer Platte entlang einer eine Falz bildenden Faltlinie ($5_1$...$5_{n-1}$) erhalten werden und daß jede Rippe ($3_1$...$3_{n-1}$) im Inneren der Nuten des Sockels durch die der Oberkante entgegengesetzten Ränder ($7_1$...$7_n$; $8_1$...$8_n$) gehalten wird.

3. Verfahren nach Anspruch 1, dadurch gekennzeichnet, daß die Rippen ($3_1$...$3_{n-1}$) dadurch erhalten werden, daß ein Band aus leichter Aluminiumlegierung mehrfach übereinander und abwechselnd in zwei aufeinanderfolgende Faltrichtungen gefaltet wird, um ein gewelltes Band zu bilden.

4. Verfahren nach Anspruch 3, dadurch gekennzeichnet, daß das gefaltete Band auf dem Sockel durch die Faltlinien ($5_1$...$5_{n-1}$) einer gleichen Faltrichtung gehalten wird, die ins Innere der Nuten ($2_1$...$2_n$) des Sockels eingeführt sind.

5. Verfahren nach einem beliebigen der Ansprüche 1 bis 4, dadurch gekennzeichnet, daß das Verlöten der Rippen ($3_1$...$3_{n-1}$) auf dem Sockel durch Aufbringen von Lotstäben gegenüber den Nuten ($2_1$...$2_n$) und durch Schmelzen der Lötstäbe erhalten wird, indem der Sockel auf einer Heizplatte angeordnet wird.

6. Wärmesenke bestehend aus einem Sockel (1) aus leichter Aluminiumlegierung, auf dem Kühlrippen ($3_1$...$3_{n-1}$), ebenfalls aus leichter Aluminiumlegierung, mit mindestens einem ihrer Ränder im Inneren von Nuten ($2_1$...$2_n$) befestigt sind, dadurch gekennzeichnet, daß der Sockel (1) und die Rippen ($3_1$...$3_{n-1}$) mit einer Kupferschicht (4) bedeckt sind und daß die Rippen durch eine Zinnlötung ($10_1$...$10_n$) in den Nuten verlötet gehalten werden.

7. Wärmesenke nach Anspruch 6, dadurch gekennzeichnet, daß die Rippen ($3_1$ bis $3_{n-1}$) eine rechteckige flache Form haben.

8. Wärmesenke nach Anspruch 6, dadurch gekennzeichnet, daß jede Rippe ($3_1$...$3_{n-1}$) die Form einer um eine einen Falz bildende Faltlinie ($5_1$...$5_{n-1}$) gefalteten Platte hat und daß jede Rippe ($3_1$...$3_{n-1}$) im Inneren der Nuten ($2_1$...$2_n$) im Sockel (1) durch die der Oberkante entgegengesetzten Ränder ($7_1$...$7_n$; $8_1$...$8_n$) gehalten wird.

9. Wärmesenke nach Anspruch 7, dadurch gekennzeichnet, daß die Rippen ($3_1$...$3_{n-1}$) durch mehrfaches und abwechselnd in zwei aufeinanderfolgende Faltrichtungen ($5_1$...$5_{n-1}$) erfolgendes Zusammenfalten eines Bands aus leichter Aluminiumlegierung zur Bildung eines gewellten Bandes erhalten werden.

10. Wärmesenke nach einem beliebigen der Ansprüche 6 bis 9, dadurch gekennzeichnet, daß der Sockel (1) eine flache Form hat.

## Claims

1. A method of manufacturing a heat sink formed by a base (1) of light aluminium alloy material forming support for heat dissipation ribs ($3_1$...$3_{n-1}$), characterized in that it consists in realizing the base (1) and the ribs ($3_1$...$3_{n-1}$) out of a light aluminium alloy material, in making grooves ($2_1$...$2_n$) into the base, each groove being dimensioned so as to permit the engagement of a rib ($3_1$...$3_{n-1}$) by at least one of its edges, in covering by an electrolytical process the base and the ribs with a superficial layer of copper (4), in engaging the edges ($7_1$...$7_n$; $8_1$...$8_n$) of each rib which has to be fixed to the base (1) into the corresponding grooves ($2_1$ to $2_n$) and in soldering, by fusion of a tin admixture, the edges of the ribs engaged in the grooves for realizing the permanent assembly of the ribs ($3_1$...$3_{n-1}$) on the base.

2. A method according to claim 1, characterized in that the ribs ($3_1$...$3_{n-1}$) are obtained by folding a base about a foldling line ($5_1$...$5_{n-1}$) forming a fold and in that each rib ($3_1$...$3_{n-1}$) is held in the grooves of the base by the edges ($7_1$...$7_n$; $8_1$...$8_n$) opposed to the top edge.

3. A method according to claim 1, characterized in that the ribs ($3_1$...$3_{n-1}$) are obtained by folding a band of light aluminium alloy material several times back on itself and alternatingly about two consecutive folding directions in order to form an ondulated band.

4. A method according to claim 3, characterized in that the folded band is maintained on the base by folding lines ($5_1$...$5_{n-1}$) of the same direction, engaged in the grooves ($2_1$...$2_n$) of the base.

5. A method according to any one of claims 1 to 4, characterized in that the soldering of the ribs ($3_1$...$3_{n-1}$) on the base is obtained by depositing soldering sticks facing the grooves ($2_1$...$2_n$) and by fusioning the soldering sticks obtained by placing the base on a heating plate.

6. A heat sink formed by a base (1) of light aluminium alloy material on which cooling ribs ($3_1$...$3_{n-1}$), also of light aluminium alloy material, are fixed by at least one of their edges within grooves ($2_1$...$2_n$), characterized in that the base (1) and the ribs ($3_1$...$3_{n-1}$) are covered by a copper layer (4) and in that the ribs are held soldered in the grooves by a tin soldering $(10_1...10_n)$.

7. A heat sink according to claim 6, characterized in that the ribs $(3_1...3_{n-1})$ have a flat rectangular shape.

8. A heat sink according to claim 6, characterized in that each rib $(3_1...3_{n-1})$ has the form of a plate folded about a folding line $(5_1...5_{n-1})$ forming fold and in that each rib $(3_1...3_{n-1})$ is held within grooves $(2_1...2_n)$ in the base (1) by the edges opposed to the top edge $(7_1...7_n; 8_1...8_n)$.

9. A heat sink according to claim 7, characterized in that the ribs $(3_1...3_{n-1})$ are obtained by folding a band of light aluminium alloy material several times back onto itself and alternatingly about two consecutive folding directions $(5_1...5_{n-1})$ in order to form an ondulated band.

10. A heat sink according to any one of claims 6 to 9, characterized in that the base (1) has a flat form.